Europäisches Patentamt

(19) European Patent Office

Office européen des brevets

(11) Numéro de publication : **0 495 689 A2**

## (12) DEMANDE DE BREVET EUROPEEN

(21) Numéro de dépôt : 92400021.9

(22) Date de dépôt : 06.01.92

(51) Int. Cl.⁵ : **B66D 1/30**

(30) Priorité : **15.01.91 FR 9100372**

(43) Date de publication de la demande :
**22.07.92 Bulletin 92/30**

(84) Etats contractants désignés :
**AT BE CH DE DK ES FR GB GR IT LI LU NL PT SE**

(71) Demandeur : **SOLLAC**
**Immeuble Elysées La Défense, 29 Le Parvis**
**F-92800 PUTEAUX (FR)**

(72) Inventeur : **Decool, Michel**
**Route de Lyncle**
**F-59230 Cappelebrouck (FR)**
Inventeur : **Hamm, Gérard**
**Rue du Pont Loquet**
**F-62162 Vieille Eglise (FR)**
Inventeur : **Vanhems, Benoît**
**16, rue Carnot**
**F-59114 Steenvoorde (FR)**

(74) Mandataire : **Moncheny, Michel et al**
**c/o Cabinet Lavoix 2 Place d'Estienne d'Orves**
**F-75441 Paris Cedex 09 (FR)**

(54) **Procédé de réparation d'un tambour de pont-roulant ou appareil analogue.**

(57) L'invention concerne un procédé de réparation d'un tambour de pont-roulant ou appareil analogue, comprenant une partie centrale tubulaire cylindrique (1), munie d'une gorge hélicoïdale (2) formant un logement continu pour un câble (3), et deux flasques radiaux (4) d'extrémité reliés à la partie centrale par des portions cylindriques intermédiaires (5). Selon ce procédé, on usine la partie centrale (1) du tambour usé et l'on dispose autour de cette partie centrale, un manchon de réparation (6) formé de deux demi-coquilles assemblées par soudage, puis on injecte ou on coule entre ce manchon et la partie centrale du tambour un matériau de liaison (13) qui peut être une résine époxy.

FIG.2

EP 0 495 689 A2

La présente invention concerne un procédé de réparation d'un tambour enrouleur-dérouleur de câble d'un pont roulant ou d'un treuil, et un manchon de réparation pour la mise en oeuvre du procédé.

Dans les dispositifs de levage du type pont roulant ou treuils divers, les tambours connus comportent une partie centrale tubulaire cylindrique, munie d'une gorge hélicoïdale pour le guidage du câble et son rangement à spires non jointives, afin d'éviter un frottement des différentes spires les unes avec les autres.

Le tambour comporte généralement deux flasques radiaux d'extrémité permettant de l'accoupler à un moteur ou réducteur.

Après une certaine durée d'utilisation, le couple important exercé par le câble sur le tambour provoque une usure de la gorge hélicoïdale qui n'a plus le profil adéquat. Lorsque la gorge est trop usée, l'enroulement du câble n'est plus régulier et certaines spires viennent plus ou moins se chevaucher, cependant que d'autres laissent entre elles des espaces importants.

Dans un tel cas, les spires adjacentes subissent un frottement les unes contre les autres, ce qui échauffe le câble qui risque de se rompre.

Une solution consiste à réusiner la gorge hélicoïdale afin de lui conférer un nouveau profil pour assurer un parfait guidage du câble lors de son enroulement sur le tambour. Mais, compte tenu de l'épaisseur minimale de la paroi du tambour qu'il convient de respecter, en-dessous de laquelle les caractéristiques mécaniques ne sont plus garanties, cette solution ne peut pas être réitérée de nombreuses fois.

Une autre solution consiste à recharger le tambour en soudant de la matière nouvelle et à réusiner la gorge hélicoïdale.

Cette solution nécessite un recuit de détensionnement du tambour. En effet, l'apport de chaleur du fait de la soudure engendre des contraintes au niveau du métal entraînant un risque de fissuration. Or un tambour de pont roulant, outre la partie cylindrique munie de la gorge hélicoïdale, est muni à chacune de ses extrémités de dispositifs d'entrainement de construction précise et complexe. Le rechargement par soudure nécessitant un recuit de détensionnement entraîne l'obligation de pratiquer un tel recuit également sur les pièces solidaires du tambour, ce qui risque d'affecter la précision d'usinage de ces dispositifs d'entrainement.

L'invention vise à proposer un procédé de réparation d'un tambour de pont-roulant, treuil ou appareil analogue qui évite les inconvénients du procédé du rechargement par soudure et prolonge la durée totale d'utilisation de tels tambours.

Elle a pour objet un procédé de réparation d'un tambour de pont-roulant, treuil ou appareil analogue comprenant une partie tubulaire centrale cylindrique, munie d'une gorge hélicoïdale formant un logement continu pour un câble, et deux flasques radiaux d'extrémité reliés à la partie centrale par une portion cylindrique intermédiaire, caractérisé en ce qu'on usine la partie centrale du tambour pour la débarrasser de la gorge hélicoïdale et l'on dispose autour de la partie centrale du tambour un manchon de réparation dont le diamètre intérieur est supérieur à celui de ladite partie centrale, de façon à délimiter un intervalle entre ce manchon et la partie centrale, et l'on introduit dans cet intervalle un matériau de liaison, tel qu'une résine époxy.

De préférence :
- la résine époxy a les caractéristiques suivantes :
- masse volumique comprise entre 1800 et 2000 kg/m3;
- résistance à la traction entre 200 et 800 daN/cm2;
- allongement à la rupture inférieur à 0,8%;
- module d'élasticité en traction entre 60000 et 100 000 daN/cm2;
- résistance à la compression supérieur à 140 000 daN/cm2;
- coefficient de retrait inférieur à 5 pour 10 000;
- résistance à l'arrachement supérieur à 255 daN/cm2;
- on réalise le manchon de réparation en au moins deux éléments complémentaires, on met en place ces éléments sur le tambour à réparer en les faisant reposer par leurs extrémités sur lesdites portions cylindriques intermédiaires, puis on soude lesdits éléments entre eux avant d'injecter le matériau de liaison.

L'invention a également pour objet un manchon de réparation pour la mise en oeuvre du procédé ainsi qu'un tambour ainsi réparé.

D'autres caractéristiques et avantages apparaîtront au cours de la description qui va suivre, donnée uniquement à titre d'exemple et faite en référence aux dessins annexés, dans lesquels :
- la Fig. 1 est une vue schématique en coupe longitudinale d'un tambour de pont roulant;
- la Fig. 2 est une vue en coupe longitudinale d'un tambour réparé suivant le procédé de l'invention;
- la Fig. 3 est une vue en coupe suivant la ligne 3-3 de la Fig. 2.

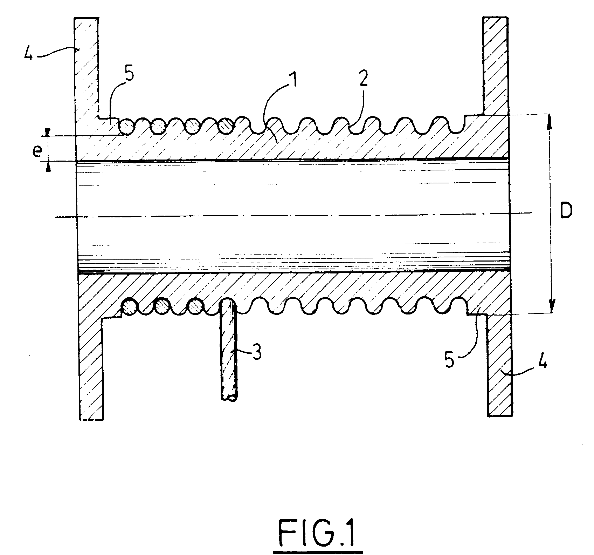

Comme représenté Fig. 1, un tambour enrouleur-dérouleur de câble de pont roulant comprend principalement une partie tubulaire centrale 1, cylindrique, d'axe X-X.

Une gorge hélicoïdale 2 à profil arrondi est ménagée dans cette partie centrale 1 du tambour, formant un logement continu servant de siège à un câble 3 sur lequel est accrochée la charge à lever et/ou à déplacer. La gorge hélicoïdale 2 s'étend sur toute la périphérie de la partie centrale 1.

Chaque extrémité de la partie centrale 1 du tambour est reliée à un flasque radial 4 au moyen d'une portion cylindrique 5 de diamètre D intermédiaire entre le diamètre de la partie centrale et celui des flasques 4. Ces derniers sont, selon les cas, une couronne dentée ou une collerette d'extrémité et peuvent être pourvus d'un accouplement ou d'un dispositif de freinage (non représentés) selon le mode de réalisation adopté.

Lorsque l'épaisseur e de matière en fond de logement de la gorge hélicoïdale 2 atteint une valeur minimale en-dessous de laquelle les caractéristiques mécaniques du tambour ne sont plus garanties, il devient impossible, si la gorge 2 est usée, de la réusiner par enlèvement de matière.

Le procédé de réparation du tambour selon l'invention consiste à envelopper la partie centrale 1 usée d'un manchon de réparation constitué de portions de coquilles, manchon sur lequel il sera possible de réusiner une gorge hélicoïdale.

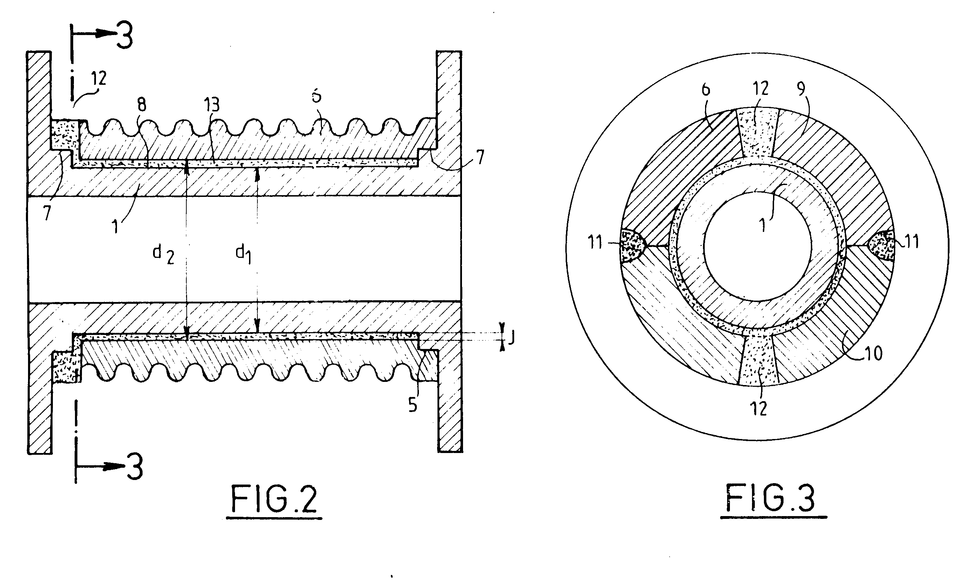

La Fig. 2 représente un tambour réparé au moyen du procédé selon l'invention.

La partie centrale 1 du tambour a été usinée pour la débarrasser de la gorge hélicoïdale 2 et former ainsi un cylindre de diamètre d1.

Un manchon de réparation 6 enveloppe la partie centrale 1 du tambour.

Le manchon 6 est cylindrique, d'axe X-X, de diamètre intérieur d2 supérieur à d1.

Chaque extrémité du manchon 6 est munie d'une portée d'appui 7, de diamètre D égal au diamètre des portions 5 du tambour.

Le manchon 6 prend appui sur le tambour à réparer au moyen de ses portées d'appui 7 qui reposent sur les portions 5 dudit tambour, délimitant un interstice ou intervalle 8 entre celui-ci et la partie centrale 1 du tambour, d'épaisseur J égale à (d2-d1/2). De préference, J est supérieur à 3 mm.

Le manchon 6, est constitué d'au moins deux éléments. Dans l'ensemble de réalisation représenté Fig. 3, le manchon 6 est constitué de deux demi-manchons 9, 10 soudés entre eux en 11.

Les cordons de soudure 11 permettant de joindre les deux demi-manchons 9, 10 s'étendent sur toute la longueur du manchon 6 sur une hauteur sensiblement égale à la moitié de l'épaisseur du manchon.

Chaque demi-manchon 9, 10 est muni à l'une de ses extrémités d'un trou 12, ménagé dans sa portée d'appui 7 et qui débouche au-delà des portions cylindriques 5.

Le trou 12 peut être radial comme représenté au dessin.

Il peut également se prolonger par un évidment ménagé dans la surface intérieure du demi-manchon.

Une résine époxy 13 assure la liaison entre la partie centrale 1 du tambour et le manchon de réparation 6.

Le procédé de réparation selon l'invention consiste, de préference après usinage de la partie centrale 1 du tambour, à le grenailler, le dégraisser et le sécher à l'air propre et sec.

Les demi-manchons 9, 10 sont positionnés sur le tambour et soudés entre eux au moyen de cordons de soudure 11 quine sont en contact qu'avec les éléments 9, 10 et non avec le tambour à réparer.

Une résine époxy est injectée ou coulée dans l'interstice 8 entre le manchon 6 et la partie centrale 1 du tambour par un des trous 12.

L'air contenu dans l'interstice 8 entre le manchon 6 et la partie 1 du tambour s'échappe pendant l'injection de résine par l'autre trou 12.

La résine utilisée est par exemple une résine époxy ayant les caractéristiques suivantes :
- masse volumique comprise entre 1800 et 2000 kg/m3;
- résistance à la traction entre 200 et 800 daN/cm2;
- allongement à la rupture inférieur à 0,8%;
- module d'élasticité en traction entre 60000 et 100 000 daN/cm2;
- résistance à la compression supérieur à 140 000 daN/cm2;
- coefficient de retrait inférieur à 5 pour 10 000;
- résistance à l'arrachement supérieur à 255 daN/cm2.

Lors de l'injection de la résine l'étanchéité au niveau des extrémités du tambour est réalisée au moyen d'une mousse néoprène.

Cette opération d'injection peut s'effectuer par gravité en maintenant le tambour en position verticale.

Après séchage de la résine époxy, celle-ci assure le lien entre le manchon de réparation 6 et la partie centrale 1 du tambour.

La gorge hélicoïdale 2 est alors usinée sur le manchon 6 ainsi formé.

L'étape consistant à usiner la partie centrale 1 du tambour n'est pas primordiale pour assurer la bonne mise en oeuvre du procédé selon l'invention.

Il est en effet tout-à-fait possible de placer le manchon 6 sur la partie centrale 1 du tambour à réparer sans usinage préalable et d'injecter la résine qui comblera les logements restant de la gorge hélicoïdale.

L'avantage du procédé selon l'invention réside essentiellement dans sa facilité et sa simplicité de mise en oeuvre.

De plus, il ne nécessite aucun traitement thermique spécifique du tambour après réparation comme dans le cas du rechargement par soudure ce qui constitue un avantage substantiel.


**Revendications**

1. Procédé de réparation d'un tambour de pont roulant, treuil ou appareil analogue, comprenant une partie centrale tubulaire cylindrique (1), munie d'une gorge hélicoïdale (2) formant un logement continu pour un câble (3), et deux flasques radiaux (4) d'extrémité, reliés à la partie centrale par une portion cylindrique intermédiaire (5), caractérisé en ce qu'on usine la partie centrale (1) du tambour pour la débarrasser de la gorge hélicoïdale (2) et l'on dispose autour de la partie centrale (1) du tambour un manchon (6) de réparation dont le diamètre intérieur (d2) est supérieur à celui (d1) de ladite partie centrale, de façon à délimiter entre ce manchon et la partie centrale un intervalle (8), et l'on introduit dans cet intervalle un matériau de liaison (13), tel qu'une résine époxy.

2. Procédé suivant la revendication 1, caractérisé en ce que la résine époxy a les caractéristiques suivantes :

    – masse volumique comprise entre 1800 et 2000 kg/m3;

    – résistance à la traction entre 200 et 800 daN/cm2;

    – allongement à la rupture inférieur à 0,8%;

    – module d'élasticité en traction entre 60000 et 100 000 daN/cm2;

    – résistance à la compression supérieure à 140 000 daN/cm2;

    – coefficient de retrait inférieur à 5 pour 10 000;

    – résistance à l'arrachement supérieure à 255 daN/cm2.

3. Procédé suivant l'une quelconque des revendications 1 et 2, caractérisé en ce que l'épaisseur (J) de l'intervalle entre la partie centrale (1) et le manchon (6) est supérieure à 3 mm.

4. Procédé suivant l'une quelconque des revendications précédentes, caractérisé en ce qu'on réalise le manchon de réparation en au moins deux éléments complémentaires (9, 10), on met en place ces éléments sur le tambour à réparer en les faisant reposer par leurs extrémités sur lesdites portions cylindriques intermédiaires (5), puis on soude lesdits éléments entre eux avant d'introduire le matériau de liaison.

5. Procédé suivant l'une quelconque des revendications précédentes, caractérisé en ce qu'on introduit le matériau de liaison (13) par au moins un orifice (12) ménagé dans le manchon, en permettant à l'air contenu entre le manchon et la partie centrale du tambour de s'échapper par au moins un autre orifice (12).

6. Procédé suivant la revendication 5, caractérisé en ce que pendant l'opération d'introduction du matériau de liaison (13), on assure l'étanchéité entre les extrémités adjacentes du tambour et du manchon en disposant dans ces zones une mousse néoprène.

7. Manchon de réparation pour la mise en oeuvre du procédé selon l'une quelconque des revendications précédentes, caractérisé en ce que ce qu'il comporte à chacune de ses extrémités une portée cylindrique (7) de diamètre intérieur égal au diamètre des portions cylindriques intermédiaires (5) du tambour.

8. Manchon de réparation selon la revendication 7, caractérisé en ce que le manchon (6) est constitué de deux demi-manchons (9, 10) soudés entre eux par deux cordons de soudure (11).

9. Manchon de réparation selon la revendication 8 caractérisé en ce que les cordons de soudure (11) s'étendent sur toute la longueur des demi-manchons (9, 10) sur une hauteur sensiblement égale à la moitié de l'épaisseur des demi-manchons.

10. Manchon de réparation selon l'une des revendications 7 à 9, caractérisé en ce que chaque demi-manchon (9, 10) est muni à l'une de ses extrémités d'au moins un trou débouchant (12), ménagé dans sa portée d'appui (7).

11. Manchon de réparation selon la revendication 10, caractérisé en ce que le trou (12) est d'axe perpendiculaire à l'axe du manchon.

12. Manchon de réparation selon la revendication 10, caractérisé en ce que le trou (12) se prolonge par un évidement ménagé dans la surface intérieure du demi-manchon.

FIG.1

FIG.3

FIG.2